(19) Europäisches Patentamt

European Patent Office

Office européen des brevets

(11) EP 0 625 650 B1

## (12) EUROPEAN PATENT SPECIFICATION

(45) Date of publication and mention
of the grant of the patent:
**26.02.1997 Bulletin 1997/09**

(51) Int Cl.⁶: **F16G 5/20**

(21) Application number: **94107519.4**

(22) Date of filing: **14.05.1994**

(54) **V-belt or ribbed V-belt**

Keilriemen oder Keilrippenriemen

Courroie en V ou courroie à nervures en V

(84) Designated Contracting States:
**AT BE CH DE DK ES FR GB GR IE IT LI LU MC NL PT SE**

(30) Priority: **20.05.1993 DE 4316917**

(43) Date of publication of application:
**23.11.1994 Bulletin 1994/47**

(73) Proprietors:
• **THE GATES CORPORATION
Denver, Colorado 80217-5887 (US)**
• **Volkswagen Aktiengesellschaft
38401 Wolfsburg (DE)**

(72) Inventors:
• **Moedder, Ralf
D-52074 Aachen (DE)**

• **Strauss, Arnold
D-38550 Isenbuettel (DE)**

(74) Representative: **Selting, Günther, Dipl.-Ing. et al
Patentanwälte
von Kreisler-Selting-Werner,
Bahnhofsvorplatz 1 (Deichmannhaus)
50667 Köln (DE)**

(56) References cited:
EP-A- 0 281 432          EP-A- 0 339 249
EP-A- 0 433 861          EP-A- 0 451 983
DE-A- 4 038 465          DE-A- 4 040 013

• **PATENT ABSTRACTS OF JAPAN vol. 16, no. 2 (M-1197) 7 January 1992 & JP-A-32 029 041 (MITSUBOSHI BELTING) 10 October 1991**

## Description

The invention is directed to an endless V-belt or ribbed V-belt.

V-belts and ribbed V-belts serve for the transmission of peripheral forces in drive systems. These belts comprise a reinforcing inlet of pulling cords which is embedded into an elastomeric belt body. The frictional engagement between the belt surface and the drive disks is generated by the surface of the belt body, the power transmission being performed by the reinforcing inlet. Conventional standard V-belts or ribbed V-belts are provided with a reinforcing inlet of highly resistant pulling cords for allowing transmission of high peripheral forces. The caoutchouc compounds used for the belt body are suited to the large forces to be transmitted. The increased requirements on the operational safety of belt drives have led to an increased demand for disturbance-free V-belts and ribbed V-belts having a long lifespan. In known V-belts or ribbed V-belts, the elastic modulus, relative to the belt width, of the reinforcing inlet is above 5,000 N/mm. In the state of the art, it is a basic assumption that a belt with a high power transmission capacity, for obtaining a high transmission performance and a long lifespan, must have a high elastic modulus of more than 5,000 N/mm, which makes the belt relatively stiff and hardly stretchable.

An endless elastic V-belt or ribbed V-belt known from DE 40 38 465 AI can be used as a snap-on belt, i. e. this belt has a large elasticity so as to be stretchable for mounting on pulleys. This known belt has an elastic modulus, relative to the belt width, ranging between 250 N/mm and 1,500 N/mm.

It is an object of the invention to provide a belt which is capable of taking up high dynamic stresses and transmitting large forces while having an improved slippage and noise behaviour and a long lifespan.

According to the invention, the above object is solved by the features indicated in claim 1.

The invention is based on the recognition that operational failure of a belt primarily occurs due to heat-induced aging of the caoutchouc material and the resultant embrittlement. The heat-induced aging is mainly caused by vibrational changes of the rotational angle which the belt is subjected to when running around the pulleys. Such vibrational changes result in slippage and accompanying noise. Surprisingly, it has been observed that the above vibrational changes of the rotational angle in the belt drive generate heat. The degree of this heat increases with an increasing elastic modulus of the belt, i.e. with the increasing change of the dynamic force in the belt during the vibrational changes of the rotational angle.

In understanding this phenomenon, it is assumed that the energy absorption of the belt due to vibrational changes of the rotational angle is proportionate to the dynamic change of the force within the belt. Within the belt, the energy absorption is converted into heat. Accordingly, considerable heat will develop in stiff belts whereas the heat will remain low in soft belts (which have a small elastic modulus).

On the other hand, a too small elastic modulus (1,500 N/mm and less) will lead to an insufficient power transmission capacity of the belt and to an excessive drop of the elastic force of the belt over time. Therefore, belts of the above type (e.g. snap-on belts) can be used only for low transmission performances, e.g. in household appliances such as washing machines and the like. In belts with a high transmission performance, however, the elastic modulus should be above 1,500 N/mm, preferably above 1.770 N/mm. Such a belt can be used only in the manner of a standard belt, but not as a snap-on belt.

The belt of the invention combines the features of a high transmission capacity and a long life-span. This is because the elastic modulus is lower than in comparable belts so that the belt of the invention undergoes a comparably low internal heat development, particularly when employed in a drive system with non-uniform running movement. The invention has a particularly advantageous effect when the non-uniformity of the rotation of the pulleys is in the range of about 7% to 35%, and particularly 7% to 21%, as e.g. in the engine of a motor vehicle, particularly in a diesel engine.

Further, because of the reduced temperature development and the reduced dynamic changes of the force, the belt of the invention generates less noise than conventional belts.

An embodiment of the invention will be explained in greater detail hereunder with reference to the drawings.

Fig. 1     is a cross-sectional view of the belt according to the invention, and

Fig. 2     illustrates a comparison of the belt of the invention with a conventional standard belt by way of a diagram showing the long-time temperature over the vibrational amplitude.

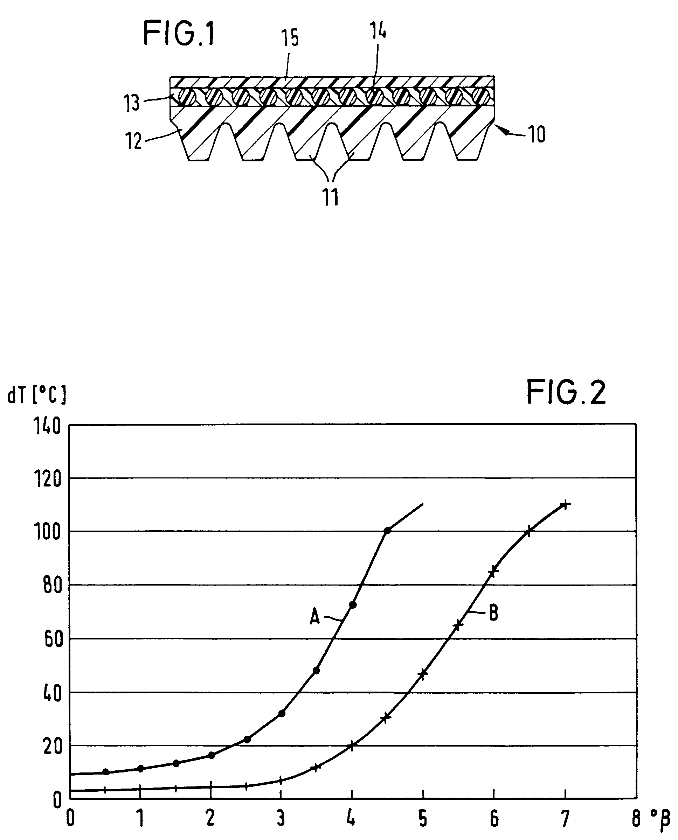

The belt shown in Fig. 1 is a ribbed V-belt having six wedge-shaped ribs and being provided as an endless belt. The ribbed V-belt has a belt body 10 made from an elastomeric material. The longitudinal ribs of belt body 10 are illustrated at 11.

The belt comprises a first layer 12 which includes also the above ribs 11 and which consists of polychloroprene (CR). The first layer 12 may have fibers embedded therein, e.g. short aramide fibers. The layer 12 is followed by a second layer 13 containing a reinforcing inlet 14. Layer 13 consists of a fiber-free adhesive rubber material, e.g. polychloroprene, ACSM (alkylated chlorosulphonated material) or HNBR (hydrogenated nitrile butadiene rubber).

In the instant case, the reinforcing inlet 14 is comprised of individual longitudinal cords of polyamide (nylon), particularly of polyamide 4.6. Alternatively, also other materials can be used for the pulling cords, e.g. polyamide 6 and polyamide 6.6, respectively, or polyester, polyethylene, polypropylene and the like. The reinforcing inlet 14 is embedded in belt body 10 while being in its stretched condition, the bias of reinforcing inlet 14 during assembly being in the range of 18 to 60 N, and preferably between 18 and 40 N.

Above layer 13, there is arranged a cover fabric 15 of polyester, protecting the back of the belt and being wear-resistant and stiff in transverse direction. The layer 12, on the other hand, is wear-resistant.

The power transmission behavior and the elasticity of the belt are primarily determined by the reinforcing inlet 14. The reinforcing inlet 14 can also consist of twisted filaments or a fabric.

The elastic modulus M of the belt is determined by

$$M = \frac{F \times L}{B \times dL} \ ,$$

wherein

F = force of the belt strand (N)
B = width of the belt (mm)
L = length of the belt in the non-extended condition (mm)
dL = change of the belt length when tensioned by the force "F" (mm).

In case of PK V-belt profiles according to Fig. 1, the force of the belt strand, forming basis of the determination of the elastic modulus, is F = 50 N per wedge rib.

The elastic modulus of the overall belt is generally equal to the elastic modulus of the reinforcing inlet.

Tests performed on the belt shown in Fig. 1, having an elastic modulus of 2,400 N/mm, have led to the result which is shown in Fig. 2 in comparison to a conventional standard belt having an elastic modulus of 5,000 N/mm. In Fig. 2, the vibrational amplitude β (in angular degrees) is indicated along the abscissa, and the resultant long-time temperature dT in Centrigrades C is shown along the ordinate. The vibrational amplitude β is generated in that the driving pulley, having the belt running therearound, performs rotational vibrations by the rotational angle β, in addition to its constant circulation. Thus, the total vibrational path of a vibration is 2 β. The long-time temperature dT indicates the measured temperature of the belt (after subtraction of the ambient temperature).

In Fig. 2, A denotes the curve obtained with a conventional standard belt, and B denotes the curve obtained with the above described embodiment of the invention. It is evident that, in the belt of the invention, the long-time temperature in the whole range of the vibrational amplitudes amounts to only a fraction of the long-time temperature occurring in the conventional belt as shown by curve A.

Due to its low internal heat build-up, the belt of the invention is superior to conventional standard belts by having a considerably longer operational life. As compared to snap-on belts, the belt of the invention is distinguished by a higher power transmission capacity.

**Claims**

1. An endless V-belt or ribbed V-belt, capable of taking up high dynamic stresses, comprising a reinforcing inlet (14) embedded in an elastomeric belt body (10),
   **characterized in**
   that the reinforcing inlet (14) has an elastic modulus (M), relative to the belt width and measured in the longitudinal direction of the belt, of less than 3,000 N/mm but more than 1,500 N/mm.

2. The V-belt or ribbed V-belt according to claim 1, wherein the reinforcing inlet (14) in the longitudinal direction of the belt is biased between 18 N and 60 N.

3. The V-belt or ribbed V-belt according to claim 1 or 2, wherein the elastic modulus (M) of the reinforcing inlet (14), relative to the belt width and measured in the longitudinal direction of the belt, is in the range of 2,000 N/mm to 2,600 N/mm.

4. The V-belt or ribbed V-belt according to any one of claims 1 to 3, wherein the reinforcing inlet (14) consists of parallel longitudinal cords of polyamide.

5. The V-belt or ribbed V-belt according to any one of claims 1 to 4, wherein the belt body (10) consists of chloroprene caoutchouc or ACSM (alkylated chlorosulphonated material) or HNBR (hydrogenated nitrile butadiene rubber).

6. A V-belt drive comprising at least two pulleys and having a V-belt or ribbed V-belt according to any one of claims 1-5 guided around said pulleys.

**Patentansprüche**

1. Endloser Keilriemen oder Keilrippenriemen, der imstande ist, hohe dynamische Belastungen aufzunehmen, mit einer in einen elastomeren Riemenkörper (10) eingebetteten Verstärkungseinlage (14),
   **dadurch gekennzeichnet**,
   daß die Verstärkungseinlage (14) relativ zu der Riemenbreite gemessen in Riemenlängsrichtung einen Elastizitätsmodul (M) von unter 3.000 N/mm, jedoch mehr als 1.500 N/mm hat.

2. Keilriemen oder Keilrippenriemen nach Anspruch 1, bei dem die Verstärkungseinlage (14) in Riemenlängsrichtung eine Vorspannung zwischen 18 N und 60 N hat.

3. Keilriemen oder Keilrippenriemen nach Anspruch 1 oder 2, bei dem der Elastizitätsmodul (M) der Verstärkungseinlage (14) relativ zu der Riemenbreite gemessen in Riemenlängsrichtung im Bereich von 2.000 N/mm bis 2.600 N/mm beträgt.

4. Keilriemen oder Keilrippenriemen nach einem der Ansprüche 1-3, bei dem die Verstärkungseinlage (14) aus parallelen längslaufenden Polyamidsträngen besteht.

5. Keilriemen oder Keilrippenriemen nach einem der Ansprüche 1-4, bei dem der Riemenkörper (10) aus Chloroprenkautschuk oder ACSM (alkyliertes chlorosulfiniertes Material) oder HNBR (hydrierter Nitril-Butadien-Rubber) besteht.

6. Keilriementrieb mit mindestens zwei Riemenscheiben und einem um die Riemenscheiben umlaufenden Keilriemen oder Keilrippenriemen nach einem der Ansprüche 1-5.

**Revendications**

1. Courroie en V sans fin ou courroie à nervures en V, capable de résister à des contraintes dynamiques élevées, comprenant une inclusion de renforcement (14) encastrée dans un corps de courroie élastomère (10), caractérisée en ce que l'inclusion de renforcement (14) a un module d'élasticité (M), relatif à la largeur de la courroie et mesuré dans le sens longitudinal de la courroie, qui est inférieur à 3 000 N/mm mais supérieur à 1 500 N/mm.

2. Courroie en V ou courroie à nervures en V selon la revendication 1, dans laquelle l'inclusion de renforcement (14) dans le sens longitudinal de la courroie est soumise à une force comprise entre 18 N et 60 N.

3. Courroie en V ou courroie à nervures en V selon l'une des revendications 1 ou 2, dans laquelle le module d'élasticité (M) de l'inclusion de renforcement (14), par rapport à la largeur de la courroie et mesuré dans le sens longitudinal de la courroie, est comprise entre 2 000 N/mm à 2 600 N/mm.

4. Courroie en V ou courroie à nervures en V selon l'une des revendications 1 à 3, dans laquelle l'inclusion de renforcement (14) est composée de cordons longitudinaux individuels parallèles de polyamide.

5. Courroie en V ou courroie à nervures en V selon l'une des revendications 1 à 4, dans laquelle le corps de la courroie (10) est composé de caoutchouc chloroprène, de MACS (matériau alkylé chlorosulfoné) ou de CHBN (caoutchouc hydrogéné butadiène nitrile).

6. Entraînement à courroie en V comprenant au moins deux poulies et ayant une courroie en v ou une courroie à nervures en V, selon l'une des revendications 1 à 5, guidée autour desdites poulies.

# FIG.1

# FIG.2